**Europäisches Patentamt**

**European Patent Office**

**Office européen des brevets**

(11) Veröffentlichungsnummer: **0 103 243**
**B1**

(12) **EUROPÄISCHE PATENTSCHRIFT**

(45) Veröffentlichungstag der Patentschrift:
05.08.87

(21) Anmeldenummer: **83108662.4**

(22) Anmeldetag: **02.09.83**

(51) Int. Cl.⁴: **B 23 K 35/362**, B 23 K 35/365, B 23 K 35/368 // B23K35/30

(54) Zusatzwerkstoff mit leicht oxidierbaren Elementen.

(30) Priorität: **11.09.82 DE 3233751**

(43) Veröffentlichungstag der Anmeldung:
**21.03.84 Patentblatt 84/12**

(45) Bekanntmachung des Hinweises auf die Patenterteilung:
**05.08.87 Patentblatt 87/32**

(84) Benannte Vertragsstaaten:
**AT BE CH FR GB IT LI NL SE**

(56) Entgegenhaltungen:
**EP - A - 0 046 368**
**DE - A - 1 916 838**
**DE - A - 2 164 892**
**DE - A - 2 238 609**
**GB - A - 668 054**
**GB - A - 689 823**
**GB - A - 1 310 150**
**US - A - 3 868 487**
**US - A - 4 149 063**

(73) Patentinhaber: **MESSER GRIESHEIM GMBH, Hanauer Landstrasse 330, D-6000 Frankfurt/Main 1 (DE)**

(72) Erfinder: **Hernnkind, Wolfgang, Dr., Pommernstrasse 16, D-6231 Schwalbach (DE)**
Erfinder: **Itzenhäuser, Reinhard, Dr., Kornblumenweg 24, D-6239 Langenhain/Ts. (DE)**
Erfinder: **Kosfeld, Gerhard, Dr., Le Mele Strasse 5, D-6243 Falkenstein (DE)**

## Beschreibung

Die Erfindung betrifft die Verwendung von Zusatzwerkstoffen mit leicht oxidierbaren Elementen wie Aluminium (Al), Titan (Ti), Zirkon (Zr), Seltene Erden sowie eine Pulverkombination, die Fluoride und Karbonate aufweist und in der Pulverkombination das Verhältnis des Trockengewichtes aller Fluoride zum Trockengewicht der Erdalkalikarbonate mindestens 2,2:1 oder grösser ist.

Aus der DE-A 2 164 892 ist ein Elektrodendraht mit Flussmittelkern bekannt, bei dem das Verhältnis aller Fluoride zu den Erdalkalikarbonaten grösser als 2,2:1 ist. Das Flussmittel besteht aus 10 bis 30% einer Mg-Al-Legierung, 40 bis 80% eines Metallfluorids, 2 bis 20% Mn und weiterer Komponenten, wie z.B. 1 bis 20% Metallcarbonate und 0,5 bis 10% eines komplexen Fluorids. Das komplexe Fluorid kann als $K_2ZrF_6$, $Na_2ZrF_6$, $K_2TiF_6$ oder $Na_2TiF_6$ vorliegen, wobei das Fluorid als $CaF_2$, $AlF_3$, $M_gF_2$, KF oder LiF vorliegt.

Aus der GB-A- 689 823 ist eine Schweisselektrode bekannt, deren Kern aus einer Nickellegierung besteht, die Titan enthält. Die Hülle enthält Calciumcarbonat und Bariumfluorid sowie Kryolith. Das Verhältnis aller Fluoride in den Karbonaten ist ebenfalls grösser als 2,2:1.

An Schweissverbindungen werden Anforderungen gestellt, die mindestens den mechanisch-technologischen Gütewerten der zu verbindenden Werkstoffe entsprechen müssen. Entscheidend für die chemische Zusammensetzung – und damit für die mechanisch-technologischen Gütewerte – einer Schweissnaht ist die Zusammensetzung von Zusatzwerkstoff und Grundwerkstoff.

Es sind warmfeste und hochwarmfeste Legierungen (Grundwerkstoffe) bekannt, die neben hohen Anteilen an Nickel, Chrom, Molybdän und Kobalt auch noch leicht oxidierbare Legierungsgehalte an Aluminium und/oder Titan enthalten. Das Aluminium bewirkt dabei die bei hohen Betriebstemperaturen notwendige Oxidationsbeständigkeit.

Ein Beispiel hierfür ist der Werkstoff NiCr23Co12Mo (W.-Nr. 2.4663), der mit 0,8...1,5% Al legiert wird.

Noch höhere Gehalte an Titan und/oder Aluminium besitzen die ausscheidungshärtbaren Legierungen und die martensitaushärtenden Stähle, wie z.B. die Sorten W.-Nr. 2.4654 mit 1,2....1,6% Al und 2,8...3,3% Ti bzw. W.-Nr. 1.6356 (X2 NiCoMoTi 18144) mit 1,5... 2,0% Ti.

Solche Legierungen lassen sich in der Praxis nur dann voll nutzen, wenn sie auch artgleich geschweisst werden können, d.h. der Zusatzwerkstoff ein Schweissgut ergibt, das in seiner Zusammensetzung analysengleich dem Grundwerkstoff ist.

Aus der DE-OS 2 238 609 ist eine derartige hochwarmfeste Legierung mit leicht oxidierbaren Elementen bekannt, die als Grundwerkstoff und als Zusatzwerkstoff verwendet werden kann. Dabei erfolgt das Verschweissen des Zusatzwerkstoffes nach dem MIG-Verfahren unter Argon. Durch diese Argonatmosphäre wird eine Oxidation der leicht oxidierbaren Elemente verhindert und ein analysengleiches Schweissgut erhalten.

Darüber hinaus ist es aus der EP-PS 0 046 368 bekannt, einen Grundwerkstoff mit leicht oxidierbaren Elementen mit einer umhüllten Stabelektrode zu verschweissen, deren Kerndraht analysengleich dem Grundwerkstoff ist. Beim Schweissen erfolgt ein Abbrand der leicht oxidierbaren Elemente, so dass z.B. ausgehend von einem Kerndraht mit 1,2% Aluminium infolge der Oxidation nur noch Reste von etwa 0,25% in das Schweissgut gelangen. Die dadurch hervorgerufene geringe Oxidationsbeständigkeit des Schweissgutes wird gemäss der EP-PS 0 046 368 durch Zusätze von Chrom, Magnesium und Niobium ausgeglichen. Damit ergibt das aus der EP-PS 0 046 368 bekannt gewordene Schweissverfahren mit umhüllter Stabelektrode infolge der Oxidation der leicht oxidierbaren Elemente kein Schweissgut, das analysengleich dem Grundwerkstoff ist. Versuche haben ferner ergeben, dass ein analysengleiches Schweissgut selbst durch hohe zusätzliche Beigaben von den leicht oxidierbaren Elementen in die Umhüllung der Stabelektrode nicht erzielbar ist. Es wurden lediglich im Schweissgut Gehalte von etwa 0,5% an diesen Elementen erzielt, wobei jedoch bereits für derart geringe Erfolge völlig unbefriedigende Schweisseigenschaften (starkes Auswerfen, unkontrolliertes Abschmelzen des Kraters) in Kauf genommen werden mussten.

Ausgehend von den Erkenntnissen beim MIG-Schweissen unter Argon, bei dem eine Oxidation durch das Fernhalten von Sauerstoff vermieden wird, könnte auch beim Schweissen mit umhüllter Elektrode bzw. mit Fülldrähten oder beim UP-Schweissen dafür Sorge getragen werden, dass zum Schutz der leicht oxidierbaren Legierungselemente im Zusatzwerkstoff nur sauerstofffreie Komponenten verwendet werden.

Danach wären von den heute bei der Zusatzwerkstoffherstellung gebräuchlichen Stoffen nachteilig sowohl die Erdalkalikarbonate und deren Oxide als auch Quarz (Silikate), Rutil (Titanate), Zirkonoxid (Zirkonate) und alle Schwermetalloxide.

Eine Ausnahme bilden aufgrund ihrer hohen Bildungswärme das Aluminiumoxid und die Aluminate.

Von folgenden sauerstofffreien Komponenten werden die gestellten Forderungen erfüllt: Alkali- und Erdalkalifluoride einschliesslich der komplexen Fluoride wie z.B. Kryolith.

Eine ausschliessliche Verwendung von Fluoriden führt jedoch zu erheblichen Schwierigkeiten schweisstechnischer Art. Bei umhüllten Stabelektroden z.B. ist der niedrigere Schmelzpunkt der Hülle nachteilig für eine gute Kraterbildung am Elektrodenende. Das dadurch bedingte Schweissen mit einem langen Lichtbogen führt wiederum zur Oxidation der leicht oxidierbaren Elemente aus der Lichtbogenatmosphäre. Somit führt auch die Verwendung von sauerstofffreien Komponenten nicht zu einem Schweissgut, das analysengleich dem Grundwerkstoff ist.

Der Erfindung liegt die Aufgabe zugrunde, beim Schmelzschweissen ohne Schutzgasatmosphäre die Oxidation der leicht oxidierbaren Legierungselemente wie Aluminium, Zirkon, Titan sowie Seltene Erden zu verhindern und ein Schweissgut zu ermöglichen, welches mindestens analysengleich dem Grundwerkstoff ist.

Diese Aufgabe wird erfindungsgemäss durch die Verwendung des Zusatzwerkstoffes für das artgleiche Schmelzschweissen von Stählen, Nikkel- und Kobaltlegierungen sowie der entsprechenden Gusssorten, welche leicht oxidierbare Elemente enthalten, gelöst.

Weiterbildungen der Erfindung sind in den Unteransprüchen gekennzeichnet.

Die durch die Erfindung erzielten Vorteile bestehen insbesondere darin, dass es nunmehr in überraschender Weise möglich ist, auch beim Schweissen mit umhüllter Elektrode bzw. mit Füllstäben oder Fülldrähten sowie auch beim UP-Schweissen ein Schweissgut mit leicht oxidierbaren Elementen zu bilden, welches analysengleich einem Grundwerkstoff mit leicht oxidierbaren Elementen ist. Damit ist es vorteilhaft möglich geworden, das jeweils schweisstechnisch günstigste Schweissverfahren einzusetzen und trotzdem ohne andersartige Legierungselemente ein Schweissgut zu bilden, welches die gleichen Eigenschaften wie der Grundwerkstoff aufweist. Der Zusatzwerkstoff nach der Erfindung ist in einfachster Art und Weise dem jeweiligen Schweissverfahren anpassbar, wobei das erfindungsgemässe Verhältnis von Fluoriden und Erdalkalikarbonaten je nach Schweissverfahren in der Umhüllung oder im Pulver realisiert ist. Dabei erfolgt die Herstellung des entsprechenden Zusatzwerkstoffes, wie umhüllte Elektrode, Fülldraht, UP-Pulver nach den bekannten Herstellverfahren, wobei selbstverständlich der jeweilige Zusatzwerkstoff die zur Herstellung erforderlichen Zusätze, wie Gleit- und Bindemittel (Tylose, Alginate, Wassergläser) etc. aufweisen. Durch entsprechende Zusammensetzung des Kerndrahtes des Röhrchenwerkstoffes bzw. der Drahtelektrode können beliebige Grundwerkstoffe mit leicht oxidierbaren Elementen verschweisst werden.

Als Grundwerkstoffe können bevorzugt Knet- und Gusswerkstoffe aller niedrig-, mittel- und hochlegierten Stähle, die leicht oxidierbare Elemente enthalten, alle Legierungen, die Nickel oder Kobalt als Hauptbasiselement (Anteil grösser oder kleiner 50%, entsprechend DIN 1736, Teil 1) enthalten, mit einem Zusatzwerkstoff nach der Erfindung verschweisst werden.

Darüber hinaus ist es auch durch die Erfindung vorteilhaft möglich geworden, in der Umhüllung bzw. im Pulver die leicht oxidierbaren Elemente vorzusehen und als Kerndraht bzw. als Röhrchenwerkstoff bzw. als Drahtelektrode einen Werkstoff mit einem niedrigeren Gehalt an leicht oxidierbaren Elementen zu verwenden.

Darüber hinaus kann durch erhöhte Zugaben der leicht oxidierbaren Elemente im Schweissgut ein höherer Anteil dieser Elemente erreicht werden als sie im Grundwerkstoff enthalten sind.

Damit kann über die zusätzlich vorgesehenen leicht oxidierbaren Elemente unabhängig von der Zusammensetzung des stab- oder drahtförmigen massiven Zusatzes ein gezielter Zu- oder Abbrand eingestellt werden. Die zusätzlich vorgesehenen oxidierbaren Elemente können in der Umhüllung bzw. in dem Pulver in reiner Form oder als Vorlegierungen bzw. Verbindungen enthalten sein.

Entgegen allen Erwartungen gelingt es somit durch die Erfindung einen Zusatzwerkstoff mit einer Pulverkombination aus Fluoriden und Erdalkalikarbonaten zu schaffen, der nicht nur einen ausreichenden Schutz für leicht oxidierbare Elemente bietet, sondern darüber hinaus auch noch sehr gute Schweisseigenschaften aufweist.

Der Pulverkombination liegt bevorzugt als Basis das System Kryolith ($Na_3\,Al\,F_6$) – Flussspat ($Ca\,F_2$) zugrunde. Dabei wird durch den hohen Kryolith-Anteil der Vorteil erreicht, dass neben dem Oxidationsschutz als Hauptaufgabe auch schnell und sicher alle sich bildenden Anteile an Aluminiumoxid gelöst werden, ohne dass dadurch der Schweissprozess gestört wird.

Der Flussspatanteil setzt die Oberflächenspannung herab und sorgt für eine gleichmässige Verteilung der Schlacke. Er hat ferner als Flussmittel eine stark reinigende Wirkung und führt auch bei zunderbeständigen Legierungen zu einer guten Benetzung (sauberen Bindung) des Schweissgutes am Grundwerkstoff bzw. am bereits erstarrten Schweissgut.

Darüber hinaus kann vorteilhaft anstelle des Kryoliths auch ein anderes Komplexsalz entsprechend der allgemeinen Formel $(Alkali)_3\,Al\,F_6$ verwendet werden.

In vorteilhafter Weiterbildung sind in der Pulverkombination zur Lichtbogenstabilisierung Elemente wie Kalium, Calcium, Titan, Natrium und/oder Kohlenstoff, zur Verbesserung des Schlakkenabgangs Zusätze wie Aluminiumoxid ($Al_2O_3$) sowie in geringen Anteilen Rutil ($TiO_2$) und Silikate ($SiO_2$) enthalten. In den Tabellen 1 bis 5 wird der bisherige Stand der Technik sowie die Erfindung nochmals anhand von Beispielen verdeutlicht. Es zeigt die

Tab. 1 Pulverkombinationen zum Schweissen von Grundwerkstoffen ohne oxidierbare Elemente.

Tab. 2 Erfindungsgemässe Pulverkombination.

Tab. 3 Einfluss der Pulverkombination auf die Schweissgutanalyse bei Verwendung von Pulverkombinationen nach dem Stand der Technik und der Erfindung.

Tab. 4 Mechanische Gütewerte.

Tab. 5 Erfindungsgemässe Pulverkombination und dazugehörige Schweissgutanalyse bei Werkstoffen mit hohem Titananteil.

Die Analysen in Tabelle 3 geben am Beispiel des Werkstoffes S-NiCr22Co12Mo (W.-Nr. 2.4627) den Einfluss von Schweissverfahren und von Pulverkombinationen auf den Gehalt an leicht oxidierbaren Legierungselementen im Schweissgut wieder. Der Vergleich von Spalte 7 mit Spalte 1 zeigt, dass die Analyse des Drahtes beim Schweissen mit nicht oxidierenden Schutzgasen im Schweissgut nahezu unverändert erhalten bleibt. Spalte 2 lässt erkennen, dass Titan und Aluminium bei einer üblichen Hüllenzusammensetzung bis auf Reste abbrennen. Die Al-Gehalte der Spalten 3..b., die z.B. mit einer erfindungsgemässen Pulverkombination nach Tabelle 2, Spalte 1 mit unterschiedlichen Aluminiumanteilen (a = 3,5 b = 5 c, = 6,5, d = 8) erzielt worden sind, machen es deutlich, dass mit dieser neuen Pulverkombination vom Kerndraht unabhängige Gehalte erzielt werden können. Es sei besonders darauf hingewiesen, dass sogar beträchtliche Aufstockungen möglich sind. Das mit den neuen Pulverkombinationen erzeugte Schweissgut von umhüllten Stabelektroden hat gleich gute mechanische Eigenschaften wie das von Schutzgas-Schweissungen, Tabelle 4.

Für den hochfesten martensitaushärtenden Stahl X2 NiCoMoTi 18144 (W.-Nr. 1.6356), Tabelle 5; lässt sich z.B. mit der nach Tabelle 2, Spalte 3 mit 0% Al und 15% FeTi angegebenen Pulverkombination auch ein analysengleiches Schweissgut bei einem Werkstoff mit erhöhtem Titangehalt einstellen.

Anhand der ausscheidungshärtbaren Nickellegierung mit der Werkstoff-Nr. 2.4554, Tabelle 5, wird nachgewiesen, dass z.B. mit den neuen Pulverkombinationen gemäss Tabelle 2, Spalte 3 mit 3% Al und 10% FeTi auch ein analysengleiches Schweissgut erschmolzen werden kann, bei dem sowohl hohe Gehalte an Aluminium als auch an Titan einzuhalten sind.

Tabelle 1
Pulverkombination zum Schweissen von Grundwerkstoffen ohne oxidierbare Elemente

| Typ I | Typ II |
|---|---|
| 40 ... 50% $CaCO_3$ | 35 ... 45% $CaCO_3$ |
| 35 ... 50% $CaF_2$ | 5 ... 10% $MgCO_3$ |
| 5 ... 10% $SiO_2$ | 35 ... 50% $Na_3Alf_6$ |
| 5 ... 10% Feldspat | 5 ... 10% $SiO_2$ |
| 5 ... 10% Desoxidationsmittel | 5 ... 10% $TiO_2$ |

Tabelle 2
Erfindungsgemässe Pulverkombination in Trocken-Gew.%

| | 1 | 2 | 3 |
|---|---|---|---|
| Kryolith $Na_3ALF_6$ | 55 | 60 | 50 |
| Flussspat $CaF_2$ | 15 | 20 | 25 |
| Marmor/Kreide $CaCO_3$ | 20 | 10 | 5 |
| Magnesit $MgCO_3$ | – | 5 | 5 |
| Al und/oder FeTi | 10 | 5 | 15 |

Tabelle 3
Einfluss der Pulverkombination bei umhüllten Stabelektroden auf die chemische Zusammensetzung des Schweissgutes im Vergleich zum Ausgangsdraht und zum Schweissgut, das im Schutzgasverfahren hergestellt wurde (Leg.-Typ: Draht bzw. Kerndraht nach W.-Nr. 2.4627)

| | Grundwerkstoff bzw. Kerndraht bzw. Drahtelektrode W.-Nr. 2.4627 | Analyse des Schweissgutes | | | | | |
|---|---|---|---|---|---|---|---|
| | | Hülle aus bekannten Pulver nach Tab. 1 Typ II | Hülle aus Pulverkomb. gemäss Erfindung, Variante: | | | | MIG-Verfahren mit Reinstargon als Schutzgas |
| | | | a | b | c | d | |
| Spalte: | 1 | 2 | 3 | 4 | 5 | 6 | 7 |
| Al | 1,15 | 0,16 | 0,80 | 1,12 | 1,28 | 1,42 | 1,12 |
| Ti | ü,46 | 0,22 | 0,44 | 0,44 | 0,48 | 0,52 | 0,40 |
| Cr | 21,9 | 22,4 | | 21,8 | | | 21,9 |
| Ni | Basis | Basis | | Basis | | | Basis |
| Mo | 8,7 | 8,8 | | 8,6 | | | 8,7 |
| Co | 11,7 | 11,3 | | 11,3 | | | 11,6 |
| Fe | 0,50 | 1,09 | | 0,65 | | | 0,55 |
| S | 0,002 | 0,004 | | 0,002 | | | 0,002 |

Tabelle 4

Mechanische Gütewerte des Schweissgutes bei Raumtemperatur. Elektrode mit Hülle aus Pulverkombination gemäss Erfindung im Vergleich zur Schutzgasschweissung mit Reinstargon

|  | Schweissgut aus umhüllten Stabelektroden, Hülle aus Pulverkomb. gemäss Erfindung, siehe Tab. 3, Variante b | Schweissgut nach dem MIG-Verfahren mit Reinstargon als Schutzgas siehe Tab. 3, Spalte 7 |
|---|---|---|
| Spalte | 1 | 2 |
| 0,2-Dehngrenze N/mm² | 520 | 494 |
| 1,0-Dehngrenze N/mm² | 560 | 540 |
| Zugfestigkeit N/mm² | 781 | 778 |
| Bruchdehnung % (lo = 5 do) | 42 | 43 |
| Schlagarbeit von ISO-V-Proben bei +20°C Joule | 86, 89, 94 | 104, 107, 115 |

Tabelle 5

Weitere Beispiele zur Anwendung der erfindungsgemässen Pulverkombinationen auf Werkstoffe mit leicht oxidierbaren Legierungselementen mit jeweils artgleichem Kerndraht

|  | Grundwerkstoff bzw. Kerndraht W.-Nr. 1.6356 | Schweissgut von umhüllten Elektroden | Grundwerkstoff bzw. Kerndraht W.-Nr. 2.4654 | Schweissgut von umhüllten Elektroden |
|---|---|---|---|---|
| Al | 0,10 | 0,10 | 1,35 | 1,48 |
| Ti | 1,72 | 1,58 | 3,34 | 3,18 |
| Cr | – | – | 18,6 | 18,4 |
| Ni | 18,2 | 17,2 | Basis | Basis |
| Mo | 4,1 | 3,4 | 4,4 | 4,3 |
| Co | 11,7 | 11,6 | 13,4 | 13,5 |
| Fe | Basis | Basis | 0,7 | 1,9 |

## Patentansprüche

1. Verwendung von Zusatzwerkstoffen mit leicht oxidierbaren Elementen wie Aluminium (Al), Titan (Ti), Zirkon (Zr), Seltene Erden sowie eine Pulverkombination, die Fluoride und Karbonate aufweist und in der Pulverkombination das Verhältnis des Trockengewichtes aller Fluoride zum Trockengewicht der Erdalkalikarbonate mindestens 2,2:1 oder grösser ist für das artgleiche Schmelzschweissen von Stählen, Nickel- und Kobaltlegierungen sowie der entsprechenden Gusssorten, welche leicht oxidierbare Elemente enthalten.

2. Verwendung von Zusatzwerkstoffen nach Anspruch 1, mit der Massgabe, dass in der Pulverkombination das Verhältnis des Trockengewichtes aller Fluoride zum Trockengewicht der Erdalkalikarbonate 3:1 ist.

3. Verwendung des Zusatzwerkstoffes nach Anspruch 1, mit der Massgabe, dass die leicht oxidierbaren Elemente in einem stab- oder röhrchenförmigen Kerndraht vorgesehen sind und die Pulverkombination Bestandteil einer den Kerndraht umgebenden Hülle ist.

4. Verwendung des Zusatzwerkstoffes nach Anspruch 1, mit der Massgabe, dass die leicht oxidierbaren Elemente in einem Röhrchen vorgesehen sind und die Pulverkombination Bestandteile einer Pulverfüllung des Röhrchens ist.

5. Verwendung des Zusatzwerkstoffes nach Anspruch 1, mit der Massgabe, dass die leicht oxidierbaren Elemente in einer Drahtelektrode vorgesehen sind und die Pulverkombination Bestandteil eines UP-Schweisspulvers ist.

6. Verwendung des Zusatzwerkstoffes nach einem der Ansprüche 3 bis 5, mit der Massgabe, dass die Pulverkombination zusätzliche Anteile an leicht oxidierbaren Elementen in reiner Form oder als Vorlegierungen bzw. Verbindungen enthält.

7. Verwendung des Zusatzwerkstoffes nach einem der Ansprüche 1 bis 6, mit der Massgabe, dass die Pulverkombination Elemente wie Kalium, Calcium, Natrium, Titan oder Kohlenstoff zur Lichtbogenstabilisierung und Zusätze wie Aluminiumoxid ($Al_2O_3$) und in kleinen Anteilen Rutil ($TiO_2$) und Silikate ($SiO_2$) zur Verbesserung des Schlackenabganges aufweist.

## Claims

1. Application of a filler containing easily oxidizable elements such as aluminum (Al), titanium (Ti), zirconium (Zr), rare earths as well as a powder combination containing fluorides and carbonates, and the ratio of the dry weight of all fluorides to the dry weight of the alkaline earth carbonates in the powder combination is at least 2.2:1 or greater for fusion welding of steel nickel and cobalt alloys and corresponding castings containing easily oxidizable elements.

2. Application of a filler according to claim 1, provided that the ratio of the dry weight of all fluorides to the dry weight of the alkaline earth carbonates in the powder combination is 3:1.

3. Application of a filler according to claim 1, provided that the easily oxidizable elements are provided in the form of a cylindrical member and the powder combination is a component of a sheath surrounding the cylindrical member.

4. Application for a filler according to claim 1, provided that the easily oxidizable elements are provided in a tube and the powder combination is a component of a powder filling of the tube.

5. Application of a filler according to claim 1, provided that the easily oxidizable elements are provided in a wire electrode and the powder combination is a component of a UP. welding powder.

6. Application of a filler according to one of the claims 3–5, provided that the powder combination contains additional percentages of easily oxidizable elements in pure form or in master alloy form or in combination form.

7. Application of a filler according to one of the claims 1–6, provided that the powder combination contains elements selected from the group consisting of potassium, calcium, sodium, titanium and carbon for light arc stabilization and additives to improve slag removal comprise aluminum oxide ($Al_2O_3$) and small amounts of rutile ($TiO_2$) and silicates ($SiO_2$).

## Revendications

1. Application de matériaux d'apport contenant des éléments facilement oxydables tels que de l'aluminium (Al), du titane (Ti), du zirconium (Zr), des terres rares ainsi qu'une combinaison de poudres contenant des fluorures et des carbonates, combinaison de poudres dans laquelle le rapport du poids sec de tous les fluorures au poids sec de tous les carbonates alcalinoterreux étant au moins égal à 2,2:1 ou supérieur à cette valeur pour le soudage par fusion de mêmes types d'aciers, d'alliages nickel-cobalt ainsi que de types de fontes correspondantes qui contiennent des éléments facilement oxydables.

2. Application de matériaux d'apport selon la revendication 1, caractérisée en ce que dans la combinaison de poudres, le rapport du poids à sec de tous les fluorures au poids à sec des carbonates alcalinoterreux est égal à 3:1.

3. Application du matériau d'apport selon la revendication 1, caractérisée en ce que les éléments facilement oxydables sont prévus dans un fil central en forme de tige ou de petit tube et la combinaison de poudres fait partie d'une enveloppe entourant le fil central.

4. Application du matériau d'apport selon la revendication 1, caractérisée en ce que les éléments facilement oxydables sont prévus dans un petit tube et la combinaison de poudres fait partie d'un remplissage de poudre du petit tube.

5. Application du matériau d'apport selon la revendication 1, caractérisée en ce que les éléments facilement oxydables sont prévus dans une électrode en forme de fil et la combinaison de poudres fait partie d'une poudre de soudage UP.

6. Application du matériau d'apport selon l'une des revendications 3 à 5, caractérisée en ce que la combinaison de poudres comporte des parties complémentaires en éléments facilement oxydables à l'état pur ou suivant des combinaisons ou des alliages préliminaires.

7. Application du matériau d'apport selon l'une des revendications 1 à 6, caractérisée en ce que la combinaison de poudres contient des éléments tels que du potassium, du calcium, du sodium, du titane ou du carbone pour stabiliser l'arc électrique et les additifs tels que de l'oxyde d'aluminium ($Al_2O_3$) et en de plus faibles parties du rutil ($TiO_2$) ou des silicates ($SiO_2$) pour améliorer l'évacuation des scories.